# EUROPEAN PATENT SPECIFICATION

(11) **EP 0 526 165 B1**
(45) Date of publication and mention of the grant of the patent: **07.10.1998**
(21) Application number: 92306881.1
(22) Date of filing: 28.07.1992
(51) Int. Cl.: H04B 10/08

(54) **Method of terminal control signal transmission and photonic switching system incorporating said method**
Verfahren zur Übertragung Endgerätsteuerungssignale und dieses Verfahren verwendendes photonisches Vermittlungssystem
Méthode de transmission de signal de contrôle de terminal et système de commutation photonique utilisant la-dite méthode

(30) Priority: 29.07.1991 JP 212774/91
(43) Date of publication of application: 03.02.1993
(73) Proprietor: NEC CORPORATION, Tokyo (JP)
(72) Inventor: Suzuki, Syuji, c/o NEC Corporation, Tokyo (JP)
(74) Representative: Orchard, Oliver John

(56) References cited:
- 5TH EUROPEAN CONFERENCE ON INTEGRATED OPTICS April 1989, PARIS, FR pages 160 - 168 PARSENS ET AL 'optical switching in telecommunications networks'
- IEEE INTERNATIONAL CONFERENCE ON COMMUNICATIONS May 1984, AMSTERDAM , NL pages 783-786 GIER ET AL 'A 565 Mbit/s line equipment for single-mode optical waveguides'
- IEEE TRANSACTIONS ON COMMUNICATIONS vol. 38, no.10, October 1990, NEW YORK US PAGES 1761-1770. ACAMPORA 'A high capacity metropolitan area network using lightwave transmission and time-multiplexed switching'
- IBM TECHNICAL DISCLOSURE BULLETIN vol. 32, no.12, May 1990, NEW YORK US. PAGES 408-409 'Method for interconnecting present and future optical networks via switches'

## Description

The present invention relates to a photonic switching system to be applied to communications with wide frequency band such as TV, video lecturing and video telephones, and a method for transmitting control signals of said system, in particular, a method for transmitting terminal control signals between a photonic switching system and a subscriber terminal.

Optical fiber communications engineering has recently made great progress and its scope of application is spreading widely; however, aiming for a more advanced system, studies have been developing in the field of photonic switching systems to switch photonic signals without converting to electric signals.

In photonic switching systems in addition to photonic communications signals, it is necessary to transmit various control signals, such as control and supervisory signals for call connection between photonic switching system and subscriber terminals, control signals being transmitted during the communications and disconnection supervisory signals.

Hitherto, concerning the transmission method of switching connection control signal between photonic switching systems, "Photonic Switching System" recorded in Japanese Patent Laid-Open No. 88709/1979 was known to people skilled in this engineering field; however, this system regenerates the switching connection control signals included in part of frequency band of photonic communications signals by converting branched photonic communications signals to electric signals and by filtering them through a low pass filter or a narrow-band pass filter.

A paper entitled "Optical Switching in Telecommunications Networks" by N.Parsons and N.Whitehead, and published by The Society of Photo-Optical Instrumentation Engineers in the Proceedings of the 5th European Conference on Integrated Optics held in Paris between April 24-28 1989, at pages 160-168 discussed some of the issues surrounding the development of optical technologies for future optical networks and highlighted the potential impact of integrated optoelectric technology in this area.

The paper mentioned briefly the applications of switching to Networks, including the use of a broadband local switching centre, an active combiner, a niobate interferometric switch, the simulation of a simple digital switch using a beam propagation method, space switch arrays, including a crossbar, wide sense, non-blocking matrix and an optical time-multiplexed space-switching network and an opto-electronic integrated circuit, where an optical input was demultiplexed into separate channels from which data was selectively stripped off and remodulated on to output wavelength channels. There was no suggestion of the transmission of control and supervisory signals, or suggestion of the way in which photonic communication signals might be modulated by electric control signals.

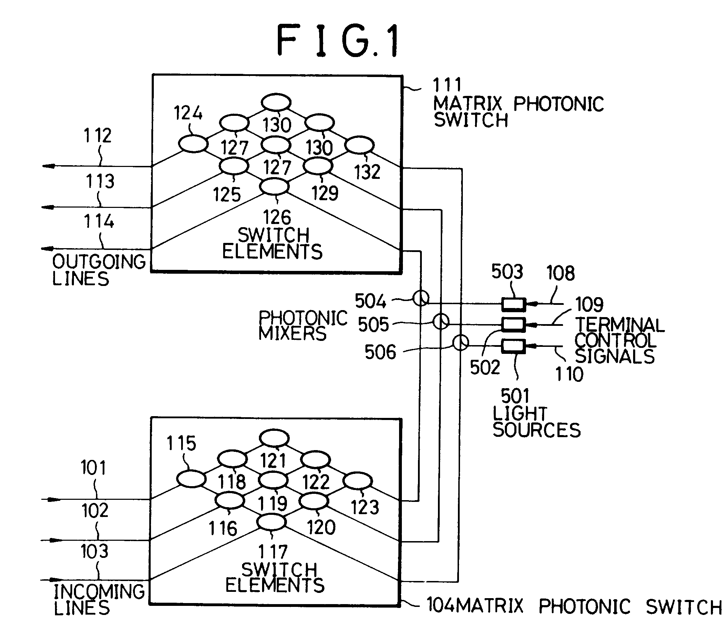

Fig. 1 of the accompanying drawings to which reference will now be made is a partial block diagram showing the main portion of a previously proposed photonic switching system known to the applicants. A photonic communications signal inputted to a photonic switching system through one of incoming lines 101 to 103 is switched by matrix photonic switch 104 composed of switching elements 115 to 123 and inputted into one of photonic mixers 504 - 506, for instance, photonic mixer 504 through switch element 123. Subscriber terminal connection control signal 108, in the form of an electric signal to be transmitted from the photonic switching system to subscriber terminal is mixed with the photonic communications signal by photonic mixer 504, after being converted to a photonic signal through light source 503. Output light from photonic mixer 504, is switched by means of matrix photonic switch 111 consisting of switching elements 124 to 132 and transmitted to a subscriber terminal through predetermined outgoing line 112, for example. Thus subscriber terminal connection control signals (hereinafter referred to as "terminal control signals") 108, 109, 110 are transmitted to subscribers together with photonic communication signals via outgoing lines 112, 113, 114.

In the previously proposed transmission method of terminal control signals, expensive light sources 501, 502, 503 were necessary for the photonic switching system. Thus the previously proposed transmission method of the terminal control signals has the problem that a light source and which consequently has boosted the cost of the photonic switching system, is required for the photonic switching system.

A feature of a method and apparatus for transmitting terminal control signals to be described below, by way of example in illustration of the invention is that the signals function as subscriber terminal connection control and supervisory signals without the need for a light source for a photonic switching system.

A particular method to be described below, by way of example, in illustration of the present invention in which transmitted terminal control signals are used for controlling and supervising the connection of subscriber terminal calls between a photonic switching system and its subscriber terminals employing a photonic modulator and demodulator for use in transmitting photonic communications signals, includes the steps of modulating, at the photonic switching system, outgoing photonic communications signals by terminal control signals in the form of electric signals, and regenerating the terminal control signals by demodulating incoming photonic communications signals at the subscriber terminal.

In the method described above the photonic amplitude modulator and demodulator can employ amplitude modulation and demodulation.

In the method described above the modulation of the photonic communications signals can be carried out by overlapping the terminal control signals on the connection control signal of the photonic switch of a photonic switching system and transmitting the modified photonic communications signals from the photonic switching system with an amplitude corresponding to the terminal control signals of the photonic switching system.

In a particular embodiment to be described below by way of example in illustration of the invention a photonic switching system has means for transmitting the terminal control signals which are used for controlling the subscriber terminal call connection between the photonic switching system and its subscriber terminals, the means for transmitting modulating, at the photonic switching system, outgoing photonic communications signals by terminal control signals which are in the form of electric signals, and means for regenerating the terminal control signals by demodulating the received photonic communications signals at the subscriber terminals.

The photonic switching system can include means for modulating the photonic communications signals by the terminal control signals, which means is a photonic amplitude modulator provided at the switching network of the photonic switching system, and means for regenerating the terminal control signals which is a photonic amplitude demodulator provided in the subscriber terminal, the means for modulating the photonic communications signals by the terminal control signals being a circuit in which the terminal control signals overlap the connection control signals of the photonic switching network, making the amplitude of the photonic communications signals correspond to the terminal control signals.

The following description and drawings disclose, by means of examples, the invention which is characterised in the appended claims, whose terms determine the extent of the protection conferred hereby.

In the drawings.
Fig. 1 is a partial block schematic diagram showing the main portion of a previously proposed photonic switching system,
Fig. 2 is a partial block schematic diagram showing an embodiment of a photonic switching system illustrative of the present invention,
Fig. 3 illustrates at (a) a plan view of a photonic modulator, such as 105, 106, 107 shown in Fig. 2, using a photonic switch element, and at (b) a characteristic diagram of the photonic switch element,
Fig. 4 shows, with reference to the diagram shown in Fig. 2, at (a) the waveform of inputted photonic communications signal 301 to photonic modulator 105, at (b) the waveform of terminal control signal 108 and at (c) the waveform of photonic signal 303 output from modulator 105, and
Fig. 5 is a partial block schematic diagram of another embodiment of the photonic switching system illustrative of the present invention.

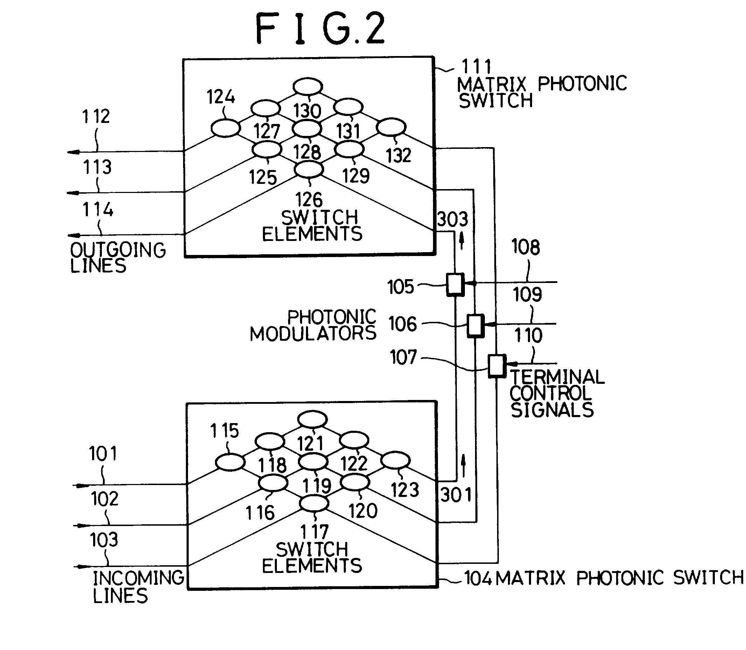

Reference will now be made to Fig. 2 which is a block schematic diagram of the principal part of a photonic switching system in which a first embodiment illustrative of the transmission method of the terminal control signal of the present invention is applied.

Photonic communications signals inputted to the photonic switching system through one of incoming lines 101, 102, 103 are switched by matrix photonic switch 104 and inputted into one of photonic modulators 105, 106, 107. Photonic modulators 105, 106, 107 perform delicate amplitude modulation of the inputted photonic communications signals by terminal control signals 108, 109, 110. Output light from photonic modulators 105 106, 107 is switched by matrix photonic switch 111 and transmitted to a subscriber terminal through outgoing lines 112, 113, 114. The subscriber can regenerate terminal control signals 108, 109, 110 by demodulating and detecting variations of amplitude of the transmitted photonic communications signals.

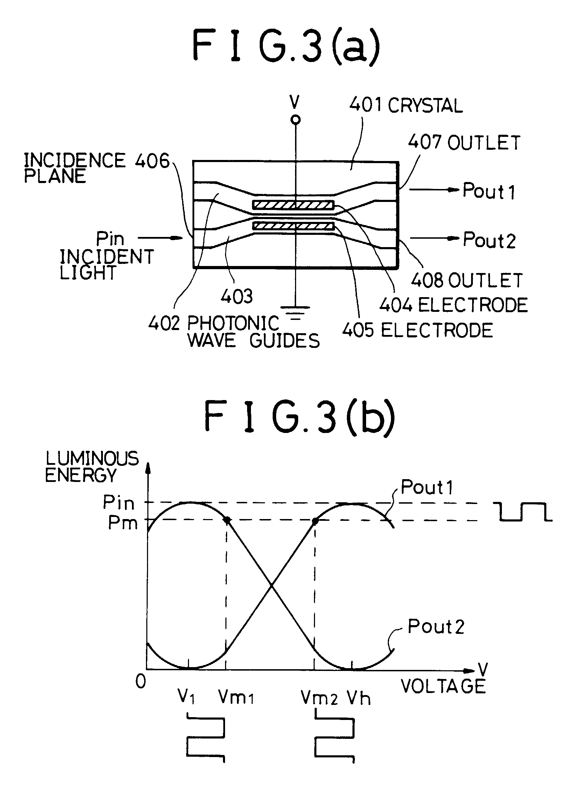

Fig. 3(a) is a typical plan showing the structure of an embodiment of photonic modulators 105, 106, 107 shown in fig. 2 to which a photonic switch element is applied, while Fig. 3(b) is a characteristic diagram of the photonic switch.

As shown in Fig. 3(a), this photonic switch is constructed of photonic wave guides 402 and 403 positioned closely on crystal 401 which has an electrophotonic effect. Crystallized lithium niobate is used as the material of crystal 401 and photonic wave guides 402 and 403 can be formed by diffusing Ti on crystal 401. When an incident light with luminous energy Pᵢₙ is inputted in this photonic switch through incidence plane 406 of photonic wave guide 403 and voltage V between electrodes 404 and 405 provided respectively on photonic wave guides 402 and 403 is changed, the ratio of lumonous energy Pₒᵤₜ₁ of outgoing light from outlet 407 of photonic wave guide 402 to a luminous energy Pₒᵤₜ₂ of outgoing light from outlet 408 of photonic wave guide 403 varies in accordance with voltage V.

Fig. 3(b) shows variations in luminous energy Pₒᵤₜ₁ and Pₒᵤₜ₂ at outlets 407 and 408 corresponding to voltage V. The sum of luminous energy Pₒᵤₜ₁ and Pₒᵤₜ₂ is constant being almost equal to luminous energy Pᵢₙ of incident light from incidence plane 406. When V = V₁ and Pₒᵤₜ₁ = 0, then Pₒᵤₜ₂ = Pᵢₙ, and when V = Vₕ and Pₒᵤₜ₁ = Pᵢₙ then Pₒᵤₜ₂ = 0.

The photonic modulator can be used in two ways. A first use is to utilize the output light from outlet 407 which is varied between the luminous energy Pₘ and Pᵢₙ changing voltage V between Vₘ₂ and Vₕ according to the terminal control signals, while a second use is to utilize outlet 48 varied between luminous energy Pₘ and Pᵢₙ changing voltage V between V₁ and Vₘ₁ according to the terminal control signals.

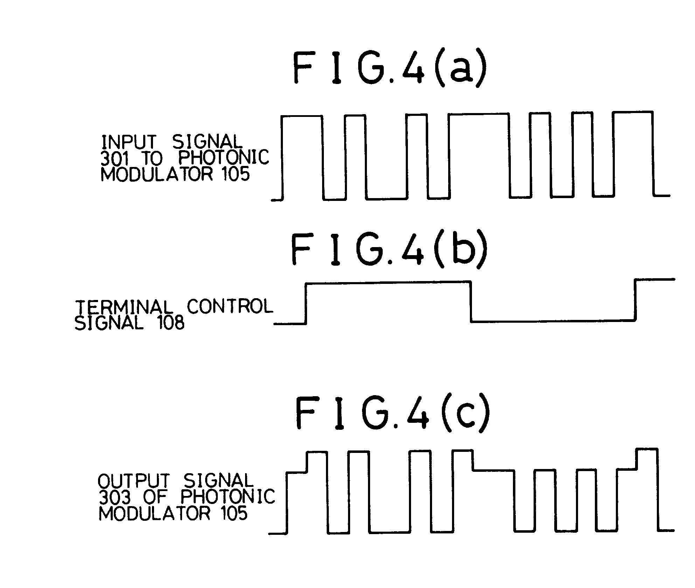

Fig. 4 signal waveform is related to the operation of photonic modulator 105. Photonic communications signal 301 is inputted into photonic modulator 105 whereby the amplitude of photonic communications signal 301 is modulated according to terminal control signal 108. Consequently, the waveform of output light signal 303 transmitted from photonic modulator 105 becomes equal to that of photonic communications signal 301 whose amplitude is modulated according to terminal control signal 108, and hence the subscriber terminal which receives output signal 303 can regenerate the terminal control signal by detecting amplitude variation of output signal 303.

As described above, in the first embodiment of the present invention, the terminal control signal can be transmitted to the subscriber terminal without converting to photonic signals using light source in the photonic switching system.

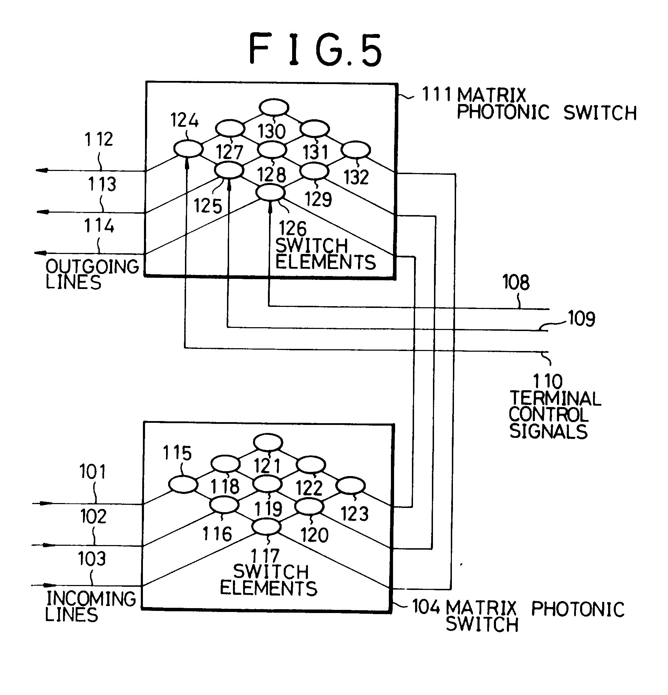

Fig. 5 is a partial block diagram of the photonic switching system to which the second embodiment of the transmission method of the terminal control signals according to the present invention, wherein the portions having the same numerals as in Fig. 2 are the same as those shown in Fig. 2. In this embodiment, terminal control signals 108, 109, 110 are inputted on switch elements 124, 125, 126 placed in matrix photonic switch 111. In this case, photonic communications signals inputted into incidence plane 406 can be transmitted through either outlet 407 or 408 of switching elements 124, 125, 126 according to the inputted voltage due to the switching conditions as shown in Fig. 3. When the photonic communications signals are outputted from outlet 407, amplitude thereof can be varied according to the terminal control signals by changing applied vbltage between Vₘ₂ and Vₕ in accordance with the terminal control signals. When the photonic communications signals are outputted from outlet 408, amplitude thereof is varied according to the terminal control signals by changing the applied voltage between V₁ and Vₘ₁. Thus the terminal control signals can be transmitted to the subscriber terminal without converting to photonic signals using any light source or a photonic modulator in the photonic switching system in the second embodiment of the present invention.

It will be understood that, although particular embodiments, illustrative of the invention, have been described, by way of example, variations and modifications thereof, as well as other embodiments may be conceived and made within the scope of the appended claims.

## Claims

1. A method of transmitting terminal control signals which are used for controlling and supervising the connection of telephone subscriber calls between a photonic switching system and its subscriber terminals employing a photonic modulator and demodulator (105-107) for transmitting the photonic communications signals by superposing the control signals (108-110) on the photonic communication signals, characterized in that it includes the steps of modulating, at the photonic switching system, the photonic communication signals which are to be input to the subscriber terminals by the respective terminal control signals (108, 109, 110) which are in the form of electric signals, and regenerating the terminal control signals (108-110) by demodulating the incoming photonic communications signals at the respective subscriber terminals.

2. A method for transmitting the terminal control signals as claimed in claim 1 wherein the modulation which is performed at the photonic switching system is amplitude modulation.

3. A method for transmitting terminal control signals as claimed in claim 1 wherein the modulation of the photonic communications signals includes the steps of overlapping the terminal control signals and the connection control signal of respective photonic switches (124, 125, 126) at the photonic switching system and transmitting the modified photonic communications signals on respective lines (112, 113, 114) from the photonic switching system to a terminal.

4. A photonic switching system serving subscriber terminals in which photonic communications signals are modulated and demodulated, including means for transmitting terminal controlling signals (108-110) which are used for controlling and supervising the connection of subscriber calls characterised in that the means for transmitting the terminal control signals includes means (105-107) for modulating, at the photonic switching system, the photonic communications signals by the terminal control signals (108, 109, 110) which are in the form of electric signals, and in that means is provided for regenerating the terminal control signals by demodulating the received photonic communications signals at a respective subscriber terminal.

5. A photonic switching system as claimed in claim 4 wherein the means for modulating the photonic communications signals by the terminal control signals (108, 109, 110) are photonic amplitude modulators (105, 106, 107) provided at the switching network of the photonic switching system, and the means for regenerating the terminal control signals are photonic amplitude demodulators provided at the subscriber terminals.

6. A photonic switching system as claimed in claim 4 wherein the means for modulating the photonic communications signals by the terminal control signals (108, 109, 110) are respective switches (124-126) of the photonic switching system.

## Patentansprüche

1. Verfahren zur Übertragung von Endgerätsteuersignalen, die zur Steuerung und Überwachung der Verbindung von Fernsprechteilnehmer-Anrufen zwischen einem optischen bzw. photonischen Vermittlungssystem und seinen Teilnehmerendgeräten verwendet werden, wobei das Verfahren einen photonischen Modulator und Demodulator (105-107) zur Übertragung der photonischen Kommunikationssignale verwendet, indem es die Steuersignale (108-110) den photonischen Kommunikationssignalen überlagert, dadurch gekennzeichnet, daß das Verfahren die folgenden Schritte aufweist: Modulation der in die Teilnehmerendgeräte einzugebenden photonischen Kommunikationssignale durch die entsprechenden Endgerätsteuersignale (108, 109, 110), welche die Form von elektrischen Signalen haben, in dem photonischen Vermittlungssystem und Regeneration der Endgerätsteuersignale (108-110) durch Demodulation der ankommenden photonischen Kommunikationssignale an den entsprechenden Teilnehmerendgeräten.

2. Verfahren zur Übertragung von Endgerätsteuersignalen nach Anspruch 1, wobei die in dem photonischen Vermittlungssystem ausgeführte Modulation eine Amplitudenmodulation ist.

3. Verfahren zur Übertragung von Endgerätsteuersignalen nach Anspruch 1, wobei die Modulation der photonischen Kommunikationssignale die Schritte zur Überlappung der Endgerätsteuersignale und der Verbindungssteuersignale entsprechender photonischer Schalter (124, 125, 126) in dem photonischen Vermittlungssystem und zum Übertragen der modifizierten photonischen Kommunikationssignale über entsprechende Leitungen (112, 113, 114) von dem photonischen Vermittlungssystem zu einem Endgerät aufweist.

4. Photonisches Vermittlungssystem zur Versorgung von Teilnehmerendgeräten, in denen photonische Kommunikationssignale moduliert und demoduliert werden, mit Einrichtungen zur Übertragung von Endgerätsteuersignalen (108-110), die zur Steuerung und Überwachung der Verbindung von Teilnehmeranrufen dienen, dadurch gekennzeichnet, daß die Einrichtungen zur Übertragung der Endgerätsteuersignale Einrichtungen (105-107) aufweisen, die zur Modulation der photonischen Kommunikationssignale durch die entsprechenden Endgerätsteuersignale (108, 109, 110), welche die Form von elektrischen Signalen haben, in dem photonischen Vermittlungssystem dienen, und daß Einrichtungen vorgesehen sind, die zur Regeneration der Endgerätsteuersignale (108-110) durch Demodulation der empfangenen photonischen Kommunikationssignale an einem entsprechenden Teilnehmerendgerät dienen.

5. Photonisches Vermittlungssystem nach Anspruch 4, wobei die Einrichtungen zur Modulation der photonischen Kommunikationssignale durch die Endgerätsteuersignale (108, 109, 110) photonische Amplitudenmodulatoren (105, 106, 107) sind, die im Koppelnetz des photonischen Vermittlungssystems vorgesehen sind, und wobei die Einrichtungen zur Regeneration der Endgerätsteuersignale an den Teilnehmerendgeräten vorgesehene photonische Amplitudendemodulatoren sind.

6. Photonisches Vermittlungssystem nach Anspruch 4, wobei die Einrichtungen zur Modulation der photonischen Kommunikationssignale durch die Endgerätsteuersignale (108, 109, 110) entsprechende Schalter (124-126) des photonischen Vermittlungssystems sind.

## Revendications

1. Procédé de transmission de signaux de contrôle de terminaux qui sont utilisés afin de contrôler et de superviser la connexion des appels d'abonnés au téléphone entre un système de commutation photonique et ses terminaux d'abonnés utilisant un modulateur et un démodulateur photoniques (105 - 107) destinés à transmettre des signaux de communications photoniques par superposition des signaux de contrôle (108 - 110) sur les signaux de communications photoniques, caractérisé en ce qu'il comprend les étapes de modulation, au niveau du système de commutation photonique, des signaux de communications photoniques qui doivent être entrés dans les terminaux des abonnés par les signaux de contrôle respectifs de terminaux (108, 109, 110) qui se présentent sous la forme de signaux électriques, et de régénération des signaux de contrôle de terminaux (108 - 110) par démodulation des signaux de communications photoniques d'entrée au niveau des terminaux respectifs des abonnés.

2. Procédé de transmission de signaux de contrôle de terminaux selon la revendication 1, dans lequel la modulation qui est réalisée au niveau du système de commutation photonique est une modulation d'amplitude.

3. Procédé de transmission de signaux de contrôle de terminaux selon la revendication 1, dans lequel la modulation des signaux de communications photoniques comprend les étapes de recouvrement des signaux de contrôle de terminaux et du signal de contrôle de connexion des commutateurs photoniques respectifs (124, 125, 126) au niveau du système de commutation photonique et de transmission des signaux de communications photoniques modifiés sur des lignes respectives (112, 113, 114) à partir du système de commutation photonique vers un terminal.

4. Système de commutation photonique desservant des terminaux d'abonnés dans lequel des signaux de communications photoniques sont modulés et démodulés, comprenant des moyens destinés à transmettre des signaux de contrôle de terminaux (108 - 110) qui sont utilisés afin de contrôler et de superviser la connexion d'appels d'abonnés, caractérisé en ce que les moyens destinés à transmettre les signaux de contrôle de terminaux comprennent des moyens (105 - 107) destinés à moduler, au niveau du système de commutation photonique, les signaux de communications photoniques par les signaux de contrôle de terminaux (108, 109, 110) qui sont sous la forme de signaux électriques, et en ce qu'il est prévu des moyens destinés à régénérer les signaux de contrôle de terminaux par démodulation des signaux de communications photoniques au niveau d'un terminal respectif d'abonné.

5. Système de commutation photonique selon la revendication 4, dans lequel les moyens destinés à moduler les signaux de communications photoniques par les signaux de contrôle de terminaux (108, 109, 110) sont des modulateurs d'amplitude photoniques (105, 106, 107) prévus au niveau du réseau de commutation du système de commutation photonique, et dans lequel les moyens destinés à régénérer les signaux de contrôle de terminaux sont des démodulateurs d'amplitude photoniques prévus au niveau des terminaux des abonnés.

6. Système de commutation photonique selon la revendication 4, dans lequel les moyens destinés à moduler les signaux de communications photoniques par les signaux de contrôle de terminaux (108, 109, 110) sont des commutateurs respectifs (124 - 126) du système de commutation photonique.
